# EUROPEAN PATENT SPECIFICATION

(11) **EP 4 187 072 B1**
(45) Date of publication and mention of the grant of the patent: **11.09.2024**
(21) Application number: 21425057.3
(22) Date of filing: 26.11.2021
(51) Int. Cl.: F02C 7/22, F23R 3/28

(54) **FUEL OIL INJECTOR**
SCHWERÖLEINSPRITZDÜSE
INJECTEUR DE FIOUL

(43) Date of publication of application: 31.05.2023
(73) Proprietor: Ansaldo Energia Switzerland AG, 5400 Baden (CH); Ansaldo Energia S.p.A., 16152 Genova (IT)
(72) Inventor: Maurer, Michael Thomas, 5400 BADEN (CH); Steiner, Harald, 5400 BADEN (CH); Pennell, Douglas, 5400 BADEN (CH); Pastorino, Pierpaolo, 16152 GENOVA (IT)
(74) Representative: Studio Torta S.p.A.

(56) References cited:
- EP-A1- 0 361 359
- EP-A1- 3 209 941
- US-A- 5 408 830
- US-A1- 2011 197 594
- US-A1- 2018 094 590
- US-A1- 2018 363 907

## Description

### TECHNICAL FIELD

The present invention relates to a fuel oil injector. In the present disclosure, it is understood the a fuel oil injector is adapted to deliver any suitable kind of liquid fuel usable in gas turbine engines, including pure fuel oil and emulsions or generally mixtures of fuel oil and water.

### BACKGROUND

As is known, operating heavy-duty gas turbine engines on different fuels is quite common and machines accepting both gas (even several types) and fuel oil. Both regulatory authorities and market are imposing increasingly strict requirements on pollutant emissions, efficiency and response, that involve nearly all operating conditions and especially aspects of operating on fuel oil. These requirements may be more easily met when gas turbine engines can be started on gas and switched to fuel oil only when higher load conditions have been reached.

More and more often, however, gas turbine engines are required to run on fuel oil at any load condition, including low load and even start-up, besides base load. Not only increase of firing temperature is sought to improve efficiency at high load, but also compliant operation at low load in therefore expected. For example, gas turbine engines running exclusively on fuel oil are frequently used as back-up systems for renewable energy market. As intervention of the back-up systems is quite rare, a relatively limited stock of fuel oil is sufficient to avoid discontinuing service and no connection to gas supply is provided, as it would be unnecessarily costly.

Fuel oil feed is accomplished through lance injector, which however are normally designed for high load and may not prove satisfactory at low load conditions.

According to a first known solution, described for example in WO 2015/044908 A1, a lance injector includes a feed line, a return line and a delivery chamber at the tip of the lance injector, fluidly between the feed line and the return line. Fuel oil is injected in a combustor assembly from the delivery chamber through an axial nozzle. Highpressure fluid is provided through the feed line and the flowrate of injected fuel is determined by controlling the return flow through the return line. It is thus possible to maintain sufficient pressure drop across the nozzle even with low delivered flowrate, required for low load operation of the gas turbine engine. However, addition of water to control emissions of nitrogen oxides (NOx) may normally be accomplished only through an additional line spraying around the injected fuel cone, whereas it would be preferred to directly supply an emulsion of fuel and water. In fact, excess fuel from the return line is collected in a reservoir and reused. If water is added to the fuel to control NOx emissions, part of the water supplied would go back to the reservoir in the returned mixture. When the mixture from the reservoir is reused, it is nearly impossible to determine the fuel/water ratio with sufficient precision, thus failing to meet emission requirements.

According to another solution, disclosed in EP 3 317 586 B1, a fuel oil lance comprises a plurality of flat fan nozzles circumferentially arranged at the lance tip and configured to approximate a hollow cone injection pattern, which ensures better combustion performance. The flowrate of injected fuel is directly controlled by fuel valves and water may be mixed to fuel to obtain optimal emissions. However, when the flowrate is reduced to operate the gas turbine engine at low load, the pressure drop across the nozzles may not be sufficient to obtain expected spraying conditions and thus result in large fuel droplets, which would not allow acceptable combustion.

EP 3 209 941 A1 discloses a fuel oil injector for a gas turbine engine comprising a tubular body extending along an axis, a first fuel oil supply duct and a second fuel oil supply duct in the tubular body.

Other examples of known injectors are disclosed in US 2018/094590 A1, US 2018/363907 A1 and US 5 408 830 A.

### SUMMARY OF THE INVENTION

It is an aim of the present invention to provide a fuel oil injector that allows the above limitations to be overcome or at least reduced.

According to the present invention there is provided a fuel oil injector for a gas turbine engine, the injector comprising:
a tubular body extending along an axis;
a first fuel oil supply duct and a second fuel oil supply duct in the tubular body;
characterized by a terminal member fitted into an injection end of the tubular body, the terminal member holding a plurality of flat fan nozzles in respective circumferential positions around the axis and at a common axial position;
wherein the nozzles are identical to each other and are configured to deliver respective flat fuel oil jets tilted with respect to the axis, whereby the fuel oil jets delimit respective sides of an inner fuel-free region, thus approximating a hollow cone by a frustum;
and wherein the first fuel oil supply duct is coupled to a first group of the nozzles and the second fuel oil supply duct is coupled to a second group of the nozzles, the nozzles of the first group being distinct from the nozzle or nozzles of the second group.

The first group of the nozzles and the second group of the nozzles may be separately supplied through the first fuel oil supply duct and the second fuel oil supply duct. When low load is requested, fuel oil supply may be reduced or even completely removed for selectively one of the first group and the second group of the nozzles, while full or in any case high fuel oil flowrate is maintained for the other one. Thus, even if the overall fuel oil flowrate is remarkably reduced, sufficient pressure drop across the active nozzles is available. As the pressure drop affects the size of the droplets and the depth of injection, desired conditions for fuel oil injection may be achieved at very low load as well as at high load. Thus, the separation of the first group of the nozzles and second group of the nozzles allows to operate gas turbine engines on fuel oil only and at the same time to meet performance and emissions requirements at any load condition. It is therefore possible to operate gas turbine engines even on fuel oil only and in some cases connection to a gas supply may be made redundant. For example, gas turbine engines provided as back-up units in the field of renewable energies may avoid the cost for connection to a gas supply network or for storage of gas.

Also, a split ratio between fuel oil flowrates supplied to the first group and to the second group of the nozzles may be adjusted, because the first fuel oil supply duct and the second fuel oil supply duct allow separate and independent supply. Adjustment of the split ratio may help cancel or mitigate combustion instabilities.

Other advantages derive from the fact that appropriate pressure drop across the nozzle may be maintained at any load condition without a return line. In fact, water may be directly mixed to fuel oil and the composition of the emulsion of water and fuel oil may be finely adjusted in accordance with operating conditions and design preferences.

The provision of angled flat fan nozzles allows to spray fuel oil around the fuel-free region and approximate a hollow-cone injection pattern, which is generally preferred.

According to an aspect of the invention, the nozzles of the first group are arranged asymmetrically with respect to the nozzle or nozzles of the second group.

According to an aspect of the invention, a first number of nozzles of the first group is different from a second group of nozzle or nozzles of the second group.

Asymmetry is generally beneficial to prevent, cancel or mitigate combustion instabilities, which are instead favored by a fully symmetric arrangement.

According to an aspect of the invention, the first group comprises two of the nozzles and the second group comprises one of the nozzles, and preferably the nozzles are configured to deliver the respective fuel oil jets over an aperture angle of 100° ± 10°, with a tilt angle of 45° ± 2° with respect to the axis and with a spread angle of 5° ± 2°, a distribution of the jets being preferably such that in a median portion of the spread angle, a concentration of the jets is a concentration mean value ± 20% and in lateral portions of the jets, each corresponding to 20% of the width of the jets, peaks of concentration of the jets are no more than 30% of the mean value.

Besides asymmetric arrangement, hollow-cone injection pattern may be thus achieved.

According to an aspect of the invention, the nozzles are configured to deliver the respective fuel oil jets so that adjacent fuel oil jets do not overlap and adjacent edges of adjacent fuel oil jets do not diverge.

Thus, both turbulence caused by jet intersection and cold zones for divergent jets may be avoided.

According to an aspect of the invention, the terminal member defines a first chamber fluidly coupled to the first group of the nozzles and isolated from the second group of the nozzles.

The first chamber formed in the terminal member allows to equalize pressure of fuel from the first fuel oil supply duct and supplied to the nozzles of the first group.

According to an aspect of the invention, the terminal member defines a second chamber extending through and fluidly isolated from the first chamber, and wherein the second chamber is fluidly coupled to the second group of the nozzles and isolated from the first group of the nozzles, the second chamber preferably comprising a compensator, configured to accommodate thermal expansion in an axial direction.

The second chamber is formed in the terminal member and through the first chamber, thus resulting in a compact and effective arrangement that, besides allowing separate supply of different groups of nozzles, may be housed in the narrow space available in the tubular body of a lance injector (normally few tens of millimeters, e.g. 35 mm). Separation of fuel oil supply to the first group of the nozzles and to the second group of the nozzles is ensured.

According to an aspect of the invention, the first chamber is fluidly coupled to the first fuel oil supply duct and the second chamber is fluidly coupled to the second fuel-oil supply duct.

According to an aspect of the invention, a gas turbine engine comprises at least one fuel oil injector as above defined.

According to an aspect of the invention, the gas turbine engine comprises a fuel oil supply system and a fuel supply controller, wherein the first fuel oil supply duct and the second fuel oil supply duct are coupled to the fuel oil supply system and the fuel supply controller is configured to independently control fuel supply to the first group of the nozzles through the first fuel oil supply duct and to the second group of the nozzles through the second fuel oil supply duct.

The fuel oil supply system and a fuel supply controller allow to exploit the provision of separate fuel oil supply ducts and groups of nozzles and optimize fuel oil injection in accordance with design preferences.

According to an aspect of the invention, the gas turbine engine comprises a water supply system, in fluid communication with the fuel oil supply system and configured to admix water to fuel oil supplied to the first fuel oil supply duct and the second fuel oil supply duct, whereby an emulsion of water and fuel oil is supplied to the nozzles.

The water supply system in fluid communication with the fuel oil supply system allows to directly admix water to fuel oil to create an emulsion, which is more effective for the purpose of controlling NOx emissions than spraying water around the fuel injection region.

According to an aspect of the invention, the fuel oil supply system comprises:
at least one fuel oil supply line in fluid communication with the first fuel oil supply duct and the second fuel oil supply duct;
a first fuel valve, operable to adjust fuel oil supply to the first fuel oil supply duct; and
a second fuel valve, operable to adjust fuel oil supply to the second fuel oil supply duct;
wherein the water supply system comprises at least one water supply line coupled with the fuel oil supply system and a water valve, operable to adjust water supply to the fuel oil supply system;
and wherein the fuel supply controller is configured to independently control the first fuel valve and the second fuel valve to independently supply the first group of the nozzles and the second group of the nozzles and is further configured to control the water valve to adjust a composition of a mixture of fuel and water supplied to the nozzles.

According to an aspect of the invention, the fuel supply controller is configured to supply fuel oil only to the first group of the nozzle during a start-up transient and/or to rampwise increase fuel oil supply to the second group of the nozzles from an idle condition to a base-load condition.

The fuel supply controller thus effectively exploits separate fuel oil supply ducts and groups of nozzles to implement control strategies that meet performance and emissions requirements even at low load conditions when the gas turbine engine is operated on fuel oil.

According to an aspect of the invention, the gas turbine engine comprises sensors configured to detect combustion instabilities, wherein the fuel supply controller is configured to adjust a ratio of a first fuel flowrate to the first group of the nozzles and a second fuel flowrate to the second group of the nozzles based on response of the sensors.

The fuel supply controller thus provides for cancellation or mitigation of adverse effects of combustion instabilities.

According to the present invention there is provided a method of controlling a fuel oil injector as defined above, comprising independently supplying a first fuel flowrate to the first group of the nozzles and a second fuel flowrate to the second group of the nozzles, wherein independently supplying comprises at least one of:
supplying only the first fuel flowrate to the first group of the nozzle during a start-up transient and rampwise increasing the second fuel flowrate oil supply to the second group of the nozzles from an idle condition to a base-load condition; and
detecting combustion instabilities and adjusting a ratio of the first fuel flowrate to the first group of the nozzles and a second fuel flowrate to the second group of the nozzles based on detected combustion instabilities.

### BRIEF DESCRIPTION OF THE DRAWINGS

The present invention will now be described with reference to the accompanying drawings, which show a number of non-limitative embodiments thereof, in which:
- figure 1 is a simplified block diagram of a gas turbine engine;
- figure 2 is a longitudinal cross section of a fuel oil injector incorporated in the gas turbine engine of figure 1 and made in accordance with an embodiment of the present invention;
- figure 3 is a fluidic circuit diagram of the fuel oil injector of figure 2 and of components of the gas turbine engine of figure 1;
- figure 4 is an enlarged front view of the fuel oil injector of figure 2;
- figure 5 is a side cross-sectional view of a portion of the fuel oil injector of figure 2, taken along the line V-V of figure 4;
- figure 6 is a schematic view of a portion of the fuel oil injector of figure 2 in use;
- figure 7 is a top plan view of a flat fan nozzle incorporated in the fuel oil injector of figure 2;
- figure 8 is a side view of the flat fan nozzle of figure 7;
- figure 9 is a graph shoeing quantities relating to the gas turbine engine of figure 1;
- figure 10 is a flow chart relating to aspects of a method of controlling a fuel oil injector in accordance with an embodiment of the present invention; and
- figure 11 is a fluidic circuit diagram of a fuel oil injector in accordance with a different embodiment of the present invention and of components of the gas turbine engine of figure 1.

### DETAILED DESCRIPTION OF EXEMPLARY EMBODIMENTS

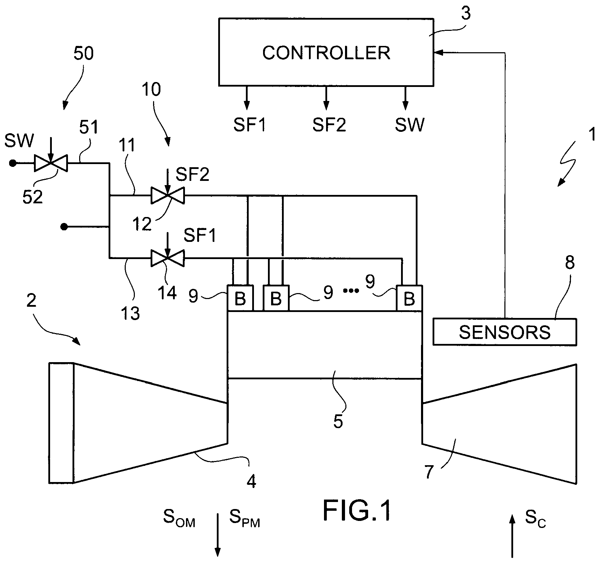

With reference to Figure 1, number 1 defines a gas-turbine plant as a whole comprising a gas turbine engine 2 and a controller 3.

The gas turbine engine 2, in turn, comprises a compressor 4, a combustor assembly 5 and an expansion section or turbine 7. Moreover, sensors 8 are arranged and configured to sense operating quantities of the gas turbine engine 2 and to send measurement signals SM to the controller 3.

The compressor 4 feeds the combustor assembly 5 with a flow of air drawn from outside.

The combustor assembly 5 comprises with a plurality of burner assemblies 9, which cause the combustion inside the combustor assembly 5, of a mixture of air and fuel.

The turbine 7 receives and expands a flow of burnt hot gas from the combustor assembly 5 to extract mechanical work, which is transferred to an external user, typically an electric generator, which is not shown here.

The fuel may be of several type and includes at least fuel oil. In addition to fuel oil, the gas turbine engine 2 may be structured to work also on other types of fuel, both gaseous and liquid. Fuel oil is supplied to the burners 9 by a fuel supply system 10, that comprises a first fuel oil supply line 11, with a first fuel valve 12, and a second fuel oil supply line 13, with a second fuel valve 14.

The gas turbine engine 1 also comprises a water supply system 50, in fluid communication with the fuel oil supply system 10 and configured to admix water to fuel oil supplied to burner assemblies 9, for and form an emulsion of water and fuel oil the purpose of controlling NOx emissions. The water supply system 50 includes at least one water supply line 51 coupled with the fuel supply system 10 and a water valve 52, operable to adjust water supply to the fuel oil supply system 10.

The controller 3 is configured to determine set-points of the gas turbine engine 1 for desired operating conditions and to use actuators of the gas turbine engine 1, including the first fuel valve 12 and the second fuel valve 14, so that set-points may be achieved. The controller 3 is also configured to monitor combustion instabilities based on response of the sensors 8 and to adjust fuel supply through the first fuel valve 12 and the second fuel valve 14 so that instabilities are cancelled or mitigated. The sensors 8 may include e.g. pressures sensors, optical sensors, temperature sensors.

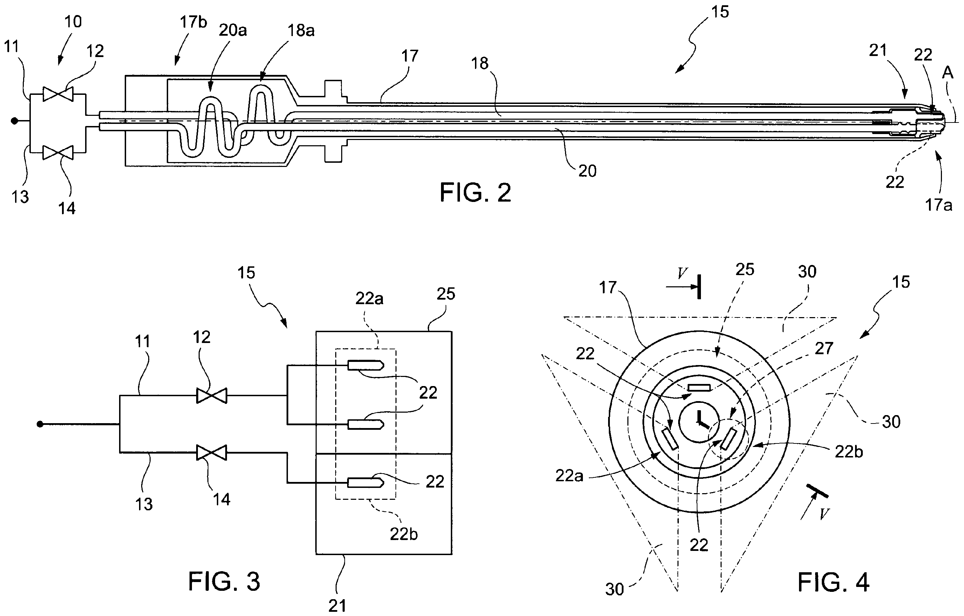

The burner 9 comprise respective fuel oil lance injectors 15, one of which is shown in detail in figure 2.

The fuel oil injector 15 comprises a tubular body 17, extending along an axis A, a first fuel oil supply duct 18 and a second fuel oil supply duct 20 that are housed in the tubular body and are coupled to the first fuel oil supply line 11 and to the second fuel oil supply line 13, respectively. The first fuel valve 12 is operable to adjust fuel oil supply to the first fuel oil supply duct 18 and the second fuel valve 14 is operable to adjust fuel oil supply to the second fuel oil supply duct 20.

A terminal member 21 is fitted into an injection end 17a of the tubular body 17 and holds a plurality of flat fan nozzles 22 (three in the example described) in respective circumferential positions around the axis A and at a common axial position.

The first fuel oil supply duct 18 and the second fuel oil supply duct 20 may be provided with respective compensators 18a, 20a at a supply end 17b of the tubular body 17, axially opposite to the injection end 17a. The first fuel oil supply duct 18 is coupled to a first group 22a of the nozzles 22 and the second fuel oil supply duct 20 is coupled to a second group 22b of the nozzles 22, as schematically illustrated in figure 3. The first group 22a includes a plurality of nozzles 22 and the second group 22b includes at least one nozzle 22, the at least one nozzle 22 of the second group 22b being distinct from the nozzles 22 of the first group 22a. In a non-limitative embodiment, the first group 22a includes a greater number of nozzles 22 than the second group 22b. Specifically, in the embodiment of figure 3 the first group 22a comprises two nozzles 22 and the second group comprises one nozzle 22. However, in other embodiments the first group and the second group may include equal number of nozzles and the nozzles of the first group and of the second group may be arranged symmetrically around the axis.

The first group 22a of the nozzles 22 is arranged asymmetrically with respect to the second group 22b of the nozzles 22 (figure 4).

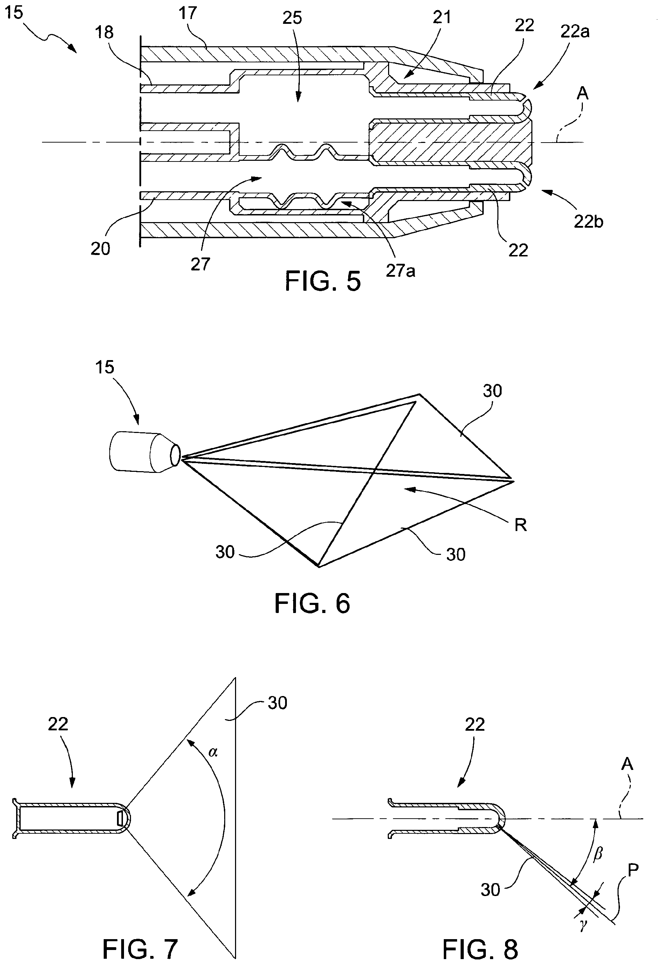

With reference also to figure 5, the terminal member 21 defines a first chamber 25, fluidly coupled to the first fuel oil supply duct 18 and to the first group 22a of the nozzles 22, and a second chamber 27, fluidly coupled to the second fuel oil supply duct 20 and to the second group 22b of the nozzles 22. The first chamber 25 is isolated from the second group 22b of the nozzles 22 and the second chamber 27 is isolated from the first group 22a of the nozzles 22. Moreover, the second chamber 27 extends axially through the first chamber 25 and is fluidly isolated therefrom. In one embodiment, the second fuel oil supply duct 20, the second chamber 27 and the nozzle 22 of the second group 22b are aligned to one another. Moreover, the second chamber 27 is defined by a pipe running across the first chamber 25 and is optionally provided with a compensator 27a, e.g. in the form of a corrugated section, configured to accommodate thermal expansion in an axial direction.

Inlets of the first chamber 25 and of the second chamber 27 may be formed in rear wall of the terminal member 21 axially opposite to the nozzles 22.

As shown in figure 6, the nozzles 22 are identical to each other are configured to deliver respective flat fuel oil jets 30 that delimit respective sides of an inner fuel-free region R, thus approximating a hollow cone by a frustum. For example, adjacent nozzles 22 may be rotated of 360°/N with respect to each other, N being the overall number of nozzles 22 in the fuel oil injector 15. Preferably, the nozzles 22 deliver the respective fuel oil jets 30 so that adjacent fuel oil jets 30 do not overlap and adjacent edges of adjacent fuel oil jets 30 do not diverge. Figures 7 and 8 show one of the nozzles 22, which in the embodiment herein disclosed, deliver fuel oil jets 30 over an aperture angle α of 100° ± 10° and with a tilt angle β of 45° ± 2° with respect to the axis A. The tilt angle β is defined for an ideal injection plane P. The jets 30 may have also a spread angle γ of 5° ± 2°, that includes the injection plane P. Moreover, the distribution of the jets 30 is such that in a median portion of the spread angle γ (corresponding to 60% of the width of the jets 30) the concentration of the sprayed mixture is the concentration mean value ± 20% and in lateral portions (each corresponding to 20% of the width of the jets 30) peaks of concentration of the sprayed mixture are no more than 30% of mean value.

The controller 3 acts as a fuel supply controller and is configured to independently control fuel supply to the first group 22a of the nozzles 22 through the first fuel oil supply duct 18 and first chamber 25 using the first fuel valve 12 and to the second group 22b of the nozzles 22 through the second fuel oil supply duct 20 and second chamber 27 using the second fuel valve 14. Specifically, the controller 3 independently controls the first fuel valve 12 through a first fuel supply control signal SF1 (figure 1) and the second fuel valve 14 through a second fuel supply control signal SF2 to independently supply the first group of the nozzles and the second group of the nozzles with respective flowrates of fuel oil in accordance with selected operating modes of the gas turbine engine 1. Moreover, the controller 3 controls the water valve 52 through a water supply control signal SW to adjust a composition of a mixture of fuel and water supplied to the nozzles.

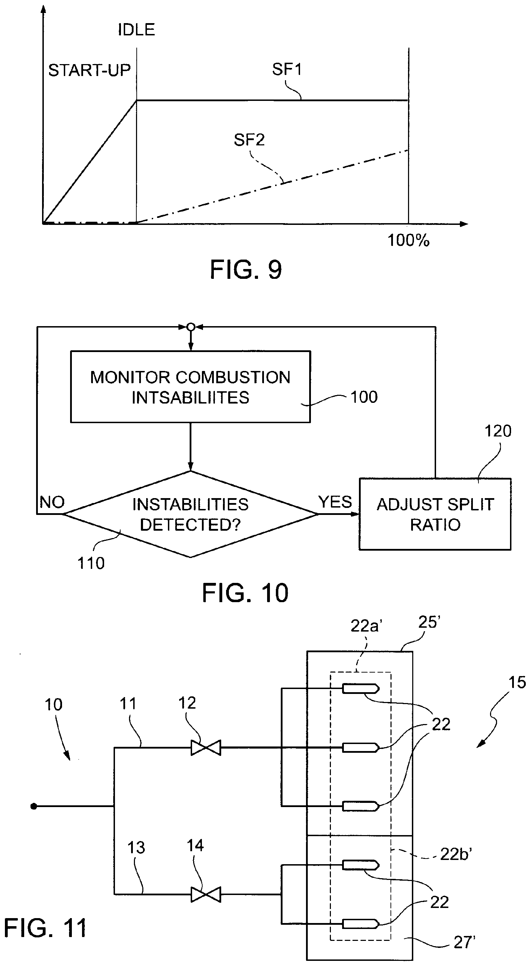

In particular, at low load condition the controller 3 activates selectively one of the first group 22a and the second group 22b of the nozzles 22, in accordance with design preferences, while the other one is deactivated. For example, the controller 3 may supply fuel oil only to the first group 22a of the nozzles 22 to keep sufficient pressure drop across the active nozzles 22, even when the overall delivered fuel flowrate is low. Low load conditions may include e.g. start-up transients, as illustrated in figure 9. At higher load, the controller 3 starts feeding also the second group 22b of the nozzles 22 and adjusts a split ratio of a first fuel flowrate for the first group 22a of the nozzles 22 to a second fuel flowrate for the second group 22b of the nozzles 22 in accordance with current operating conditions and selected set-point. For example, the controller 3 may keep the first fuel flowrate constant and rampwise increase the second fuel flowrate from an idle condition to a base-load condition. In general, the first flowrate to the first group 22a of the nozzles 22 and the second flowrate to the second group 22b of the nozzles 22 may be separately controlled to meet intermediate load request between idle and base-load.

Adjustment of the split ratio may be exploited by the controller 3 also to mitigate effects of combustion instabilities. Specifically, the controller 3 monitors combustion instabilities based on response of the sensors 8 (figure 10, block 100) and, when instabilities are detected (block 110, output YES), adjusts the split ratio through the first fuel valve 12 and the second fuel valve 14 (block 120), thus causing asymmetric delivery of fuel oil from the fuel oil injector 15. Asymmetric injection of fuel oil is beneficial because instabilities are favored by symmetric combustion conditions.

Figure 11 shows an embodiment of the invention in which a fuel oil lance injector including five nozzles 22. Three adjacent nozzles 22 form the first group 22a' and two adjacent nozzles 22 form the second group 22b'. A first chamber 25' feeds the first group 22a' of the nozzles 22 and a second chamber 27' extends through the first camera 25 and feeds the second group 22b' of the nozzles 22.

In the embodiments not shown, water may fed through the water supply system 50 downstream of the first fuel valve 12 and of the second fuel valve 14 or through separate first and second water supply lines and with separate water control valves, so that also water supply and the composition of the emulsion of water and fuel oil may be separately controlled.

Finally, it is clear that modifications and variants may be made to the injector described herein without departing from the scope of the present invention, as defined in the appended claims.

## Claims

1. A fuel oil injector for a gas turbine engine, the injector comprising:
a tubular body (17) extending along an axis (A);
a first fuel oil supply duct (18) and a second fuel oil supply duct (20) in the tubular body (17);
**characterized by** a terminal member (21) fitted into an injection end (17a) of the tubular body (17), the terminal member (21) holding a plurality of flat fan nozzles (22) in respective circumferential positions around the axis (A) and at a common axial position;
wherein the nozzles (22) are identical to each other and are configured to deliver respective flat fuel oil jets (30) tilted with respect to the axis (A), It
whereby the fuel oil jets (30) delimit respective sides of an inner fuel-free region (R), thus approximating a hollow cone by a frustum;
and wherein the first fuel oil supply duct (18) is coupled to a first group (22a; 22a') of the nozzles (22) and the second fuel oil supply duct (20) is coupled to a second group (22b; 22b') of the nozzles (22), the nozzles (22) of the first group (22a; 22a') being distinct from the nozzle or nozzles (22) of the second group (22b; 22b').

2. The injector according to claim 1, wherein the nozzles (22) of the first group (22a; 22a') are arranged asymmetrically with respect to the nozzle or nozzles (22) of the second group (22b; 22b').

3. The injector according to claim 1 or 2, wherein a first number of nozzles (22) of the first group (22a; 22a') is different from a second number of nozzle or nozzles (22) of the second group (22b; 22b').

4. The injector according to claim 3, wherein the first group (22a) comprises two of the nozzles (22) and the second group (22b) comprises one of the nozzles (22), and preferably the nozzles (22) are configured to deliver the respective fuel oil jets (30) over an aperture angle of 100° ± 10°, with a tilt angle of 45° ± 2° with respect to the axis (A) and with a spread angle (γ) of 5° ± 2°, a distribution of the jets (30) being preferably such that in a median portion of the spread angle (γ) corresponding to 60% of a width of the jets (30), a concentration of the jets (30) is a concentration mean value ± 20% and in lateral portions of the jets (30), each corresponding to 20% of the width of the jets (30), peaks of concentration of the jets (30) are no more than 30% of the mean value.

5. The injector according to any one of the preceding claims, wherein the nozzles (22) are configured to deliver the respective fuel oil jets (30) so that adjacent fuel oil jets (30) do not overlap and adjacent edges of adjacent fuel oil jets (30) do not diverge.

6. The injector according to any one of the preceding claims, wherein the terminal member (21) defines a first chamber (25; 25') fluidly coupled to the first group (22a; 22a') of the nozzles (22) and isolated from the second group (22b; 22b') of the nozzles (22).

7. The injector according to claim 6, wherein the terminal member (21) defines a second chamber (27; 27') extending through and fluidly isolated from the first chamber (25; 25'), and wherein the second chamber (27; 27') is fluidly coupled to the second group (22b; 22b') of the nozzles (22) and isolated from the first group (22a; 22a') of the nozzles (22), the second chamber (27; 27') preferably comprising a compensator (17a), configured to accommodate thermal expansion in an axial direction.

8. The injector according to claim 7, wherein the first chamber (25; 25') is fluidly coupled to the first fuel oil supply duct (18) and the second chamber (27; 27') is fluidly coupled to the second fuel oil supply duct (20).

9. A gas turbine engine, comprising at least one fuel oil injector (15) according to any one of the preceding claims.

10. The gas turbine engine according to claim 9, comprising a fuel oil supply system (17a) and a fuel supply controller (3), wherein the first fuel oil supply duct (18) and the second fuel oil supply duct (20) are coupled to the fuel oil supply system (17a) and the fuel supply controller (3) is configured to independently control fuel supply to the first group (22a; 22a') of the nozzles (22) through the first fuel oil supply duct (18) and to the second group (22b; 22b') of the nozzles (22) through the second fuel oil supply duct (20).

11. The gas turbine engine according to claim 10, comprising a water supply system (50), in fluid communication with the fuel oil supply system (17a) and configured to admix water to fuel oil supplied to the first fuel oil supply duct (18) and the second fuel oil supply duct (20), whereby an emulsion of water and fuel oil is supplied to the nozzles (22).

12. The gas turbine engine according to claim 11, wherein the fuel oil supply system (17a) comprises:
at least one fuel oil supply line (11) in fluid communication with the first fuel oil supply duct (18) and the second fuel oil supply duct (20);
a first fuel valve (12), operable to adjust fuel oil supply to the first fuel oil supply duct (18); and
a second fuel valve (14), operable to adjust fuel oil supply to the second fuel oil supply duct (20);
wherein the water supply system (50) comprises at least one water supply line (51) coupled with the fuel oil supply system (17a) and a water valve (52), operable to adjust water supply to the fuel oil supply system (17a);
and wherein the fuel supply controller (3) is configured to independently control the first fuel valve (12) and the second fuel valve (14) to independently supply the first group (22a; 22a') of the nozzles (22) and the second group (22b; 22b') of the nozzles (22) and is further configured to control the water valve (52) to adjust a composition of a mixture of fuel and water supplied to the nozzles (22).

13. The gas turbine engine according to any one of claims 10 to 12, wherein the fuel supply controller (3) is configured to supply fuel oil only to the first group (22a; 22a') of the nozzle (22) during a start-up transient and/or to rampwise increase fuel oil supply to the second group (22b; 22b') of the nozzles (22) from an idle condition to a base-load condition.

14. The gas turbine engine according to any one of claims 10 to 13, comprising sensors (8) configured to detect combustion instabilities, wherein the fuel supply controller (3) is configured to adjust a ratio of a first fuel flowrate to the first group (22a; 22a') of the nozzles (22) and a second fuel flowrate to the second group (22b; 22b') of the nozzles (22) based on response of the sensors (8).

## Patentansprüche

1. Schweröleinspritzventil für ein Gasturbinentriebwerk, wobei das Einspritzventil umfasst:
einen rohrförmigen Körper (17), der sich entlang einer Achse (A) erstreckt;
eine erste Schwerölzufuhrleitung (18) und eine zweite Schwerölzufuhrleitung (20) in dem rohrförmigen Körper (17);
**gekennzeichnet durch** ein Endelement (21), das in ein Einspritzende (17a) des rohrförmigen Körpers (17) eingepasst ist, wobei das Endelement (21) eine Vielzahl von flachen Fächerdüsen (22) in jeweiligen Umfangspositionen um die Achse (A) und in einer gemeinsamen axialen Position hält;
wobei die Düsen (22) identisch zueinander sind und so konfiguriert sind, dass sie jeweilige flache Schwerölstrahlen (30) abgeben, die in Bezug auf die Achse (A) geneigt sind,
wobei die Schwerölstrahlen (30) die jeweiligen Seiten eines inneren brennstofffreien Bereichs (R) begrenzen, wodurch ein Hohlkegel durch einen Kegelstumpf angenähert wird;
und wobei die erste Schwerölzufuhrleitung (18) mit einer ersten Gruppe (22a; 22a') der Düsen (22) und die zweite Schwerölzufuhrleitung (20) mit einer zweiten Gruppe (22b; 22b') der Düsen (22) verbunden ist, wobei die Düsen (22) der ersten Gruppe (22a; 22a') von der Düse oder den Düsen (22) der zweiten Gruppe (22b; 22b') verschieden sind.

2. Injektor nach Anspruch 1, wobei die Düsen (22) der ersten Gruppe (22a; 22a') asymmetrisch zu der Düse oder den Düsen (22) der zweiten Gruppe (22b; 22b') angeordnet sind.

3. Injektor nach Anspruch 1 oder 2, wobei sich eine erste Anzahl von Düsen (22) der ersten Gruppe (22a; 22a') von einer zweiten Anzahl von Düse oder Düsen (22) der zweiten Gruppe (22b; 22b') unterscheidet.

4. Injektor nach Anspruch 3, wobei die erste Gruppe (22a) zwei der Düsen (22) umfasst und die zweite Gruppe (22b) eine der Düsen (22) umfasst, und vorzugsweise die Düsen (22) so konfiguriert sind, dass sie die jeweiligen Schwerölstrahlen (30) über einen Öffnungswinkel von 100° ± 10°, mit einem Neigungswinkel von 45° ± 2° in Bezug auf die Achse (A) und mit einem Spreizwinkel (γ) von 5° ± 2° abgeben, wobei eine Verteilung der Strahlen (30) vorzugsweise so ist, dass in einem mittleren Abschnitt des Streuwinkels (γ), der 60% einer Breite der Strahlen (30) entspricht, eine Konzentration der Strahlen (30) ein Konzentrationsmittelwert ± 20% ist und in seitlichen Abschnitten der Strahlen (30), die jeweils 20% der Breite der Strahlen (30) entsprechen, Konzentrationsspitzen der Strahlen (30) nicht mehr als 30% des Mittelwerts betragen.

5. Injektor nach einem der vorstehenden Ansprüche, wobei die Düsen (22) so konfiguriert sind, dass sie die jeweiligen Schwerölstrahlen (30) so abgeben, dass sich benachbarte Schwerölstrahlen (30) nicht überlappen und benachbarte Kanten benachbarter Schwerölstrahlen (30) nicht auseinanderlaufen.

6. Injektor nach einem der vorstehenden Ansprüche, wobei das Endelement (21) eine erste Kammer (25; 25') definiert, die mit der ersten Gruppe (22a; 22a') der Düsen (22) in Fluidverbindung steht und von der zweiten Gruppe (22b; 22b') der Düsen (22) isoliert ist.

7. Injektor nach Anspruch 6, wobei das Endelement (21) eine zweite Kammer (27; 27') definiert, die sich durch die erste Kammer (25; 25') hindurch erstreckt und von dieser fluidisch isoliert ist, und wobei die zweite Kammer (27; 27') fluidisch mit der zweiten Gruppe (22b; 22b') der Düsen (22) gekoppelt und von der ersten Gruppe (22a; 22a') der Düsen (22) isoliert ist, wobei die zweite Kammer (27; 27') vorzugsweise einen Kompensator (17a) umfasst, der so konfiguriert ist, dass er thermische Ausdehnung in einer axialen Richtung aufnimmt.

8. Injektor nach Anspruch 7, wobei die erste Kammer (25; 25') mit der ersten Schwerölzufuhrleitung (18) und die zweite Kammer (27; 27') mit der zweiten Schwerölzufuhrleitung (20) fluidisch verbunden ist.

9. Gasturbinentriebwerk mit mindestens einer Schweröleinspritzdüse (15) nach einem der vorstehenden Ansprüche.

10. Gasturbinentriebwerk nach Anspruch 9, mit einem Schwerölversorgungssystem (17a) und einem Brennstoffversorgungsregler (3), wobei die erste Schwerölzufuhrleitung (18) und die zweite Schwerölzufuhrleitung (20) mit dem Schwerölversorgungssystem (17a) gekoppelt sind und der Brennstoffversorgungsregler (3) so konfiguriert ist, dass er die Brennstoffversorgung der ersten Gruppe (22a; 22a') der Düsen (22) durch die erste Schwerölzufuhrleitung (18) und zu der zweiten Gruppe (22b; 22b') der Düsen (22) durch die zweite Schwerölzufuhrleitung (20) voneinander unabhängig steuert.

11. Gasturbinentriebwerk nach Anspruch 10, umfassend ein Wasserversorgungssystem (50), das in Fluidverbindung mit dem Schwerölversorgungssystem (17a) steht und so konfiguriert ist, dass es dem Schweröl, das der ersten Schwerölzufuhrleitung (18) und der zweiten Schwerölzufuhrleitung (20) zugeführt wird, Wasser beimischt, wodurch den Düsen (22) eine Emulsion aus Wasser und Schweröl zugeführt wird.

12. Gasturbinentriebwerk nach Anspruch 11, wobei das Schwerölversorgungssystem (17a) umfasst:
mindestens eine Schwerölversorgungsleitung (11), die in Fluidverbindung mit der ersten Schwerölzufuhrleitung (18) und der zweiten Schwerölzufuhrleitung (20) steht;
ein erstes Brennstoffventil (12), das zur Einstellung der Schwerölzufuhr zu der ersten Schwerölzufuhrleitung (18) betätigbar ist; und
ein zweites Brennstoffventil (14), das zur Einstellung der Schwerölzufuhr zu der zweiten Schwerölzufuhrleitung (20) betätigbar ist;
wobei das Wasserversorgungssystem (50) mindestens eine mit dem Schwerölversorgungssystem (17a) gekoppelte Wasserversorgungsleitung (51) und ein Wasserventil (52) umfasst, das zur Einstellung der Wasserversorgung des Schwerölversorgungssystems (17a) betätigbar ist;
und wobei der Brennstoffversorgungsregler (3) so konfiguriert ist, dass er das erste Brennstoffventil (12) und das zweite Brennstoffventil (14) unabhängig voneinander steuert, um die erste Gruppe (22a; 22a') der Düsen (22) und die zweite Gruppe (22b; 22b') der Düsen (22) unabhängig voneinander zu versorgen, und ferner so konfiguriert ist, dass er das Wasserventil (52) steuert, um eine Zusammensetzung einer Mischung aus Brennstoff und Wasser, die den Düsen (22) zugeführt wird, einzustellen.

13. Gasturbinentriebwerk nach einem der Ansprüche 10 bis 12, wobei der Brennstoffversorgungsregler (3) so konfiguriert ist, dass er während eines Anfahrübergangs Schweröl nur der ersten Gruppe (22a; 22a') der Düsen (22) zuführt und/oder die Schwerölzufuhr zu der zweiten Gruppe (22b; 22b') der Düsen (22) von einem Leerlaufzustand zu einem Grundlastzustand rampenartig erhöht.

14. Gasturbinentriebwerk nach einem der Ansprüche 10 bis 13, mit Sensoren (8), die so konfiguriert sind, dass sie Verbrennungsinstabilitäten erfassen, wobei der Brennstoffversorgungsregler (3) so konfiguriert ist, dass er ein Verhältnis eines ersten Brennstoffdurchsatzes zu der ersten Gruppe (22a; 22a') der Düsen (22) und eines zweiten Brennstoffdurchsatzes zu der zweiten Gruppe (22b; 22b') der Düsen (22) auf der Grundlage der Reaktion der Sensoren (8) einstellt.

## Revendications

1. Injecteur de fioul pour moteur à turbine à gaz, l'injecteur comprenant:
un corps tubulaire (17) s'étendant le long d'un axe (A);
un premier conduit d'alimentation en fioul (18) et un deuxième conduit d'alimentation en fioul (20) dans le corps tubulaire (17);
**caractérisé par** un élément terminal (21) monté dans une extrémité d'injection (17a) du corps tubulaire (17), l'élément terminal (21) maintenant une pluralité de buses à jet plat (22) dans des positions circonférentielles respectives autour de l'axe (A) et à une position axiale commune;
dans lequel les buses (22) sont identiques les unes aux autres et sont configurées pour délivrer des jets de fioul plats (30) respectifs inclinés par rapport à l'axe (A), de sorte que les jets de fioul (30) délimitent des côtés respectifs d'une région sans carburant interne (R), tendant ainsi vers un cône creux par un tronc de cône;
et dans lequel le premier conduit d'alimentation en fioul (18) est couplé à un premier groupe (22a; 22a') des buses (22) et le deuxième conduit d'alimentation en fioul (20) est couplé à un deuxième groupe (22b; 22b') des buses (22), les buses (22) du premier groupe (22a; 22a') étant distinctes de la buse ou des buses (22) du deuxième groupe (22b; 22b').

2. Injecteur selon la revendication 1, dans lequel les buses (22) du premier groupe (22a; 22a') sont disposées asymétriquement par rapport à la buse ou aux buses (22) du deuxième groupe (22b; 22b').

3. Injecteur selon la revendication 1 ou 2, dans lequel un premier nombre de buses (22) du premier groupe (22a; 22a') est différent d'un deuxième nombre de buse ou de buses (22) du deuxième groupe (22b; 22b').

4. Injecteur selon la revendication 3, dans lequel le premier groupe (22a) comprend deux des buses (22) et le deuxième groupe (22b) comprend l'une des buses (22), et de préférence les buses (22) sont configurées pour délivrer les jets de fioul respectifs (30) sur un angle d'ouverture de 100° ± 10°, avec un angle d'inclinaison de 45° ± 2° par rapport à l'axe (A) et avec un angle d'étalement (y) de 5° ± 2°, une répartition des jets (30) étant de préférence telle que dans une partie médiane de l'angle d'étalement (y) correspondant à 60 % d'une largeur des jets (30), une concentration des jets (30) est une valeur moyenne de concentration ± 20 % et dans les parties latérales des jets (30), correspondant chacune à 20 % de la largeur des jets (30), les pics de concentration des jets (30) ne dépassent pas 30 % de la valeur moyenne.

5. Injecteur selon l'une quelconque des revendications précédentes, dans lequel les buses (22) sont configurées pour délivrer les jets de fioul respectifs (30) de sorte que les jets de fioul (30) adjacents ne se chevauchent pas et les bords adjacents de jets de fioul (30) adjacents ne divergent pas.

6. Injecteur selon l'une quelconque des revendications précédentes, dans lequel l'élément terminal (21) définit une première chambre (25; 25') couplée fluidiquement au premier groupe (22a; 22a') des buses (22) et isolée du deuxième groupe (22b; 22b') des buses (22).

7. Injecteur selon la revendication 6, dans lequel l'élément terminal (21) définit une deuxième chambre (27; 27') s'étendant à travers la première chambre (25; 25') et isolée fluidiquement de celle-ci, et dans lequel la deuxième chambre (27; 27') est couplée fluidiquement au deuxième groupe (22b; 22b') des buses (22) et isolée du premier groupe (22a; 22a') des buses (22), la deuxième chambre (27; 27') comprenant de préférence un compensateur (17a), configuré pour s'adapter à la dilatation thermique dans une direction axiale.

8. Injecteur selon la revendication 7, dans lequel la première chambre (25; 25') est couplée fluidiquement au premier conduit d'alimentation en fioul (18) et la deuxième chambre (27; 27') est couplée fluidiquement au deuxième conduit d'alimentation en fioul (20).

9. Moteur à turbine à gaz, comprenant au moins un injecteur de fioul (15) selon l'une quelconque des revendications précédentes.

10. Moteur à turbine à gaz selon la revendication 9, comprenant un système d'alimentation en fioul (17a) et un organe de commande d'alimentation en carburant (3), dans lequel le premier conduit d'alimentation en fioul (18) et le deuxième conduit d'alimentation en fioul (20) sont couplés au système d'alimentation en fioul (17a) et l'organe de commande d'alimentation en carburant (3) est configuré pour commander indépendamment l'alimentation en carburant du premier groupe (22a; 22a') des buses (22) par le biais du premier conduit d'alimentation en fioul (18) et du deuxième groupe (22b; 22b') des buses (22) par le biais du deuxième conduit d'alimentation en fioul (20).

11. Moteur à turbine à gaz selon la revendication 10, comprenant un système d'alimentation en eau (50), en communication fluidique avec le système d'alimentation en fioul (17a) et configuré pour mélanger de l'eau au fioul fourni au premier conduit d'alimentation en fioul (18) et au deuxième conduit d'alimentation en fioul (20), de sorte qu'une émulsion d'eau et de fioul est fournie aux buses (22).

12. Moteur à turbine à gaz selon la revendication 11, dans lequel le système d'alimentation en fioul (17a) comprend:
au moins une conduite d'alimentation en fioul (11) en communication fluidique avec le premier conduit d'alimentation en fioul (18) et le deuxième conduit d'alimentation en fioul (20);
une première vanne de carburant (12), pouvant être actionnée pour régler l'alimentation en fioul du premier conduit d'alimentation en fioul (18); et
une deuxième vanne de carburant (14), pouvant être actionnée pour régler l'alimentation en fioul du deuxième conduit d'alimentation en fioul (20);
dans lequel le système d'alimentation en eau (50) comprend au moins une conduite d'alimentation en eau (51) couplée au système d'alimentation en fioul (17a) et une vanne d'eau (52), pouvant être actionnée pour régler l'alimentation en eau du système d'alimentation en fioul (17a);
et dans lequel l'organe de commande d'alimentation en carburant (3) est configuré pour commander indépendamment la première vanne de carburant (12) et la deuxième vanne de carburant (14) pour alimenter indépendamment le premier groupe (22a; 22a') des buses (22) et le deuxième groupe (22b; 22b') des buses (22) et est configuré en outre pour commander la vanne d'eau (52) pour régler une composition d'un mélange de carburant et d'eau fourni aux buses (22).

13. Moteur à turbine à gaz selon l'une quelconque des revendications 10 à 12, dans lequel l'organe de commande d'alimentation en carburant (3) est configuré pour fournir du fioul uniquement au premier groupe (22a; 22a') de la buse (22) pendant une période transitoire de démarrage et/ou pour augmenter progressivement l'alimentation en fioul du deuxième groupe (22b; 22b') des buses (22) d'un état de repos à un état de charge de base.

14. Moteur à turbine à gaz selon l'une quelconque des revendications 10 à 13, comprenant des capteurs (8) configurés pour détecter des instabilités de combustion, dans lequel l'organe de commande d'alimentation en carburant (3) est configuré pour régler un rapport d'un premier débit de carburant vers le premier groupe (22a; 22a') des buses (22) et un deuxième débit de carburant vers le deuxième groupe (22b; 22b') des buses (22) sur la base de la réponse des capteurs (8).
